# EUROPÄISCHE PATENTSCHRIFT

(11) **EP 4 076 814 B1**
(45) Veröffentlichungstag und Bekanntmachung des Hinweises auf die Patenterteilung: **22.11.2023**
(21) Anmeldenummer: 20824887.2
(22) Anmeldetag: 09.12.2020
(51) Int. Cl.: B23D 45/20, B23D 36/00, G01N 21/898

(54) **VORRICHTUNG ZUM TRENNEN EINES MIT EINER DURCHGEHENDEN FOLIE BESCHICHTETEN STRANGS AUS ANEINANDERSTOSSENDEN PROFILLEISTEN**
DEVICE FOR SEPARATING A STRAND, WHICH IS COMPOSED OF PROFILED STRIPS BUTTING AGAINST EACH OTHER AND IS COATED WITH A CONTINUOUS FILM
DISPOSITIF DE SÉPARATION D'UN BRIN COMPOSÉ DE BANDES PROFILÉES EN APPUI L'UNE CONTRE L'AUTRE ET REVÊTU D'UN FILM CONTINU

(30) Priorität: 17.12.2019 AT 511032019
(43) Veröffentlichungstag der Anmeldung: 26.10.2022
(73) Patentinhaber: Neuhofer, Franz, 4893 Zell am Moos (AT)
(72) Erfinder: Neuhofer, Franz, 4893 Zell am Moos (AT)
(74) Vertreter: Hübscher & Partner Patentanwälte GmbH
(86) Internationale Anmeldenummer: PCT/AT2020/060441
(87) Internationale Veröffentlichungsnummer: WO 2021/119685

(56) Entgegenhaltungen:
- JP-A- S6 384 814

## Beschreibung

### Strangs aus aneinanderstoßenden Profilleisten

### Technisches Gebiet

Die Erfindung bezieht sich auf eine Vorrichtung zum Trennen eines mit einer durchgehenden Folie beschichteten Strangs aus stirnseitig lose aneinanderstoßenden Profilleisten entsprechend den einzelnen Profilleisten mit einem den Strang mit der unbeschichteten Unterseite aufnehmenden Längsförderer, mit einem eine Kappsäge aufweisenden, während des Trennschnitts durch einen Antrieb synchron zum Strang bewegbaren Schlitten, mit einer Messeinrichtung für den Strangvorschub und mit einer den Schlittenantrieb in Abhängigkeit vom Strangvorschub steuernden Steuereinrichtung, wobei der Kappsäge in der Ausgangsstellung des Schlittens innerhalb einer Leistenlänge eine Einrichtung zur Erfassung der Stöße zwischen den einzelnen Profilleisten vorgelagert ist, und wobei die Einrichtung zur Stoßerfassung eine unter einem spitzen Winkel gegenüber dem Längsförderer ausgerichtete Beleuchtung und eine digitale Kamera umfasst.

### Stand der Technik

Um in einer vorgegebenen Länge abgelängte Profilleisten kontinuierlich mit einer Folie beschichten zu können, werden die einzelnen Profilleisten in Längsrichtung lose zu einem Strang aneinandergereiht, sodass der Strang durchgehend mit der Folie beschichtet werden kann. Nach der Beschichtung muss der Strang allerdings wieder entsprechend den einzelnen nur durch die Folie zusammengehaltenen Profilleisten getrennt werden. Zu diesem Zweck wird eine Kappsäge eingesetzt, die auf einem Schlitten gelagert ist, der während des Trennschnitts synchron zum Strang angetrieben wird. Mithilfe eines auf dem Strang abrollenden Messrades wird der Strangvorschub gemessen und in Abhängigkeit von diesem Strangvorschub der Schlitten mit der Kappsäge über eine Steuereinrichtung so angesteuert, dass sich die Kappsäge im Bereich des Stoßes zwischen den zu trennenden Profilleisten befindet. Obwohl die Länge der einzelnen Profilleisten vorgegeben ist, kann die Kappsäge nur in einem Toleranzbereich gegenüber dem Stoß zwischen den Profilleisten ausgerichtet werden, sodass die Kappsäge die aneinanderstoßenden Enden der Profilleisten mithilfe von zwei mit Abstand voneinander angeordneten Sägeblättern beidseits des Stoßes kappt, um Fehlschnitte und damit Ausschussleisten zu vermeiden. Nachteilig ist insbesondere der durch das beidseitige Kappen der Enden der Profilleisten bedingte Verschnitt.

Zur Ansteuerung von Trenneinrichtungen für Halbzeuge in Abhängigkeit von Messdaten der Halbzeuge ist es bekannt (DE 10 2009 005 706 A1), optische Messeinrichtungen vorzusehen, mit deren Hilfe der Querschnitt der Halbzeuge durch eine Kamera erfasst werden kann, um anhand des Querschnitts und des Vorschubs die Halbzeuge in Abhängigkeit von einem vorgegebenen Volumen für eine nachfolgende Umformung zu durchtrennen.

Zur optischen Erfassung des Längsverlaufs von aus einem Baumstamm gesägten Brettern mithilfe zumindest einer Kamera ist es darüber hinaus bekannt (DE40 33 485 A1), die Bretter von unterschiedlichen Seiten derart zu beleuchten, dass die Beleuchtung durch die unterschiedlichen Lichtquellen je für sich erfasst werden kann, beispielsweise dadurch, dass bei gleichzeitiger Bestrahlung Lichtquellen unterschiedlicher Wellenlänge eingesetzt oder die Lichtquellen abwechselnd eingeschaltet werden.

Auch ist es zur geometrischen Erfassung des Schnittendes eines Profils bekannt (DE 10 2005 043 223 A1), das Schnittende mithilfe eines am Profil reflektierten Messstrahls einer schwenkbaren Entfernungsmesseinrichtung abzutasten und die jeweilige Schwenkstellung der Entfernungsmesseinrichtung mithilfe einer Winkelmesseinrichtung zu erfassen, deren Messstrahl an einer mit der Entfernungsmesseinrichtung starr verbundenen Winkelmessplatte reflektiert wird, sodass aus den Messdaten der Winkelmesseinrichtung und den zugehörigen Messdaten der Entfernungsmesseinrichtung ein Abbild des Schnittendes des Profils errechnet werden kann.

Eine Vorrichtung nach dem Oberbegriff des Anspruchs 1 ist der JP S63 84814 A zu entnehmen.

Alle diese Einrichtungen zur Erfassung der geometrischen Gestalt eines Werkstücks eignen sich jedoch nicht zur genauen Bestimmung des Stoßes zwischen zwei stirnseitig aneinanderstoßenden Profilleisten.

### Darstellung der Erfindung

Der Erfindung liegt somit die Aufgabe zugrunde, eine Vorrichtung zum Trennen eines durchgehend mit einer Folie beschichteten Strangs aus stirnseitig lose aneinanderstoßenden Profilleisten so auszugestalten, dass der Verschnitt klein gehalten werden kann.

Ausgehend von einer Vorrichtung der eingangs geschilderten Art löst die Erfindung die gestellte Aufgabe dadurch, dass die optische Achse der digitalen Kamera gegenüber dem Längsförderer gegensinnig zur Beleuchtung geneigt ist, dass die Vorrichtung einen auf dem Strang abrollenden, an die Steuereinrichtung als Messeinrichtung für den Strangvorschub angeschlossenen Drehgeber aufweist, dass die digitale Kamera eine Auswerteeinheit aufweist, und dass der Drehgeber durch die Auswerteeinheit der digitalen Kamera ansteuerbar ist.

Da eine Stoßerkennung vorgesehen ist, wird nicht nur der Stoß zwischen zwei stirnseitig aneinanderstoßenden Profilleisten, sondern auch dessen Lage in Bezug auf die Einrichtung zur Stoßerkennung erfasst, sodass aufgrund des bekannten Abstands der Stoßerkennungseinrichtung von der Kappsäge in der Ausgangsstellung ihres Schlittens die Kappsäge ausreichend genau gegenüber dem Stoß anhand der Vorschubdaten des Strangs angestellt werden kann, um den Strang mit einem Trennschnitt zu durchtrennen, der durch den Stoß verläuft. Die einzuhaltende Toleranz wird durch die Dicke des Sägeblatts bestimmt. Voraussetzung ist, dass der Stoß zwischen zwei Profilleisten mit einer ausreichenden Sicherheit erfasst werden kann. Dies wird möglich, wenn die Einrichtung zur Stoßerkennung einerseits eine Beleuchtung und anderseits eine digitale Kamera umfasst, wobei sowohl die Beleuchtung als auch die digitale Kamera unter einem spitzen Winkel gegenüber dem Längsförderer ausgerichtet sind, allerdings mit einer gegensinnigen Neigung. Durch das unter einem spitzen Winkel auf der Unterseite der Profilleisten gegen den Stoßbereich einfallende Licht kann nämlich der von der Kamera im Gegenlicht erfassbare Kontrast verstärkt werden, was für die sichere Stoßerkennung von entscheidender Bedeutung ist. Wird über eine entsprechende Auswerteeinheit der digitalen Kamera ein Stoß zwischen zwei Profilleisten erkannt, so wird über ein entsprechendes Steuersignal der auf dem Strang abrollende Drehgeber angestoßen, um der Steuereinrichtung den Vorschub des Strangs ab der Stoßlage bei der Stoßerkennung bis zum Trennschnitt vorzugeben. Unter der Bedingung, dass die Einrichtung zur Stoßerkennung der Kappsäge in der Ausgangsstellung des Schlittens innerhalb einer Leistenlänge vorgelagert ist, kann somit der Schlitten über die Steuereinrichtung so angesteuert werden, dass die Kappsäge genau gegenüber dem erfassten Stoß ausgerichtet wird und daher den Trennschnitt durch den Stoß zwischen zwei Profilleisten ausführen kann.

Die gegensinnige Neigung der Beleuchtung und der digitalen Kamera gegenüber dem Längsförderer ist für die sichere optische Erfassung des Stoßes zwischen zwei fugenlos aneinanderstoßenden Profilleisten notwendig. Besonders vorteilhafte Bedingungen ergeben sich dabei, wenn die in Vorschubrichtung ausgerichtete Beleuchtung, unter einem kleineren spitzen Winkel gegenüber dem Längsförderer geneigt ist als die digitale Kamera.

Um den Fall berücksichtigen zu können, dass die Einrichtung zur Stoßerkennung einen Stoß zwischen zwei Profilleisten nicht erfasst, sollte trotzdem ein Trennschnitt vorgesehen werden, um Schäden in Bereichen nach der Kappsäge zu unterbinden. Zu diesem Zweck können einerseits ein auf dem Strang abrollendes, die Steuereinrichtung durchgehend mit Vorschubdaten beaufschlagendes Messrad und anderseits ein den Trennschnitt der Kappsäge auf eine Schlittenstellung beziehender, mit der Steuereinrichtung verbundener Schnittmelder vorgesehen werden, wobei beim Ausbleiben eines den Drehgeber ansteuernden Steuersignals der Auswerteeinheit die Steuereinrichtung die Kappsäge in Abhängigkeit von den Daten des Schnittmelders und von den Vorschubdaten des Messrads für einen Notschnitt ansteuert. Da durch den der Kappsäge zugeordneten Schnittmelder der Steuereinrichtung eine Bezugsgröße für einen Trennschnitt vorgegeben wird, kann anhand dieser Bezugsgröße der für den Notschnitt erforderliche Strangvorschub anhand der bekannten Leistenlänge ermittelt und über das Messrad erfasst werden, um die Kappsäge entsprechend ansteuern zu können. Dies bedeutet, dass die in herkömmlicher Weise von einem Messrad erfassten Vorschubdaten des Strangs zur Steuerung der Kappsäge für einen Notschnitt mit dem Nachteil einer ungenauen Ausrichtung der Kappsäge gegenüber dem Stoß zwischen den Profilleisten herangezogen, Folgeschäden aber vermieden werden.

### Kurze Beschreibung der Erfindung

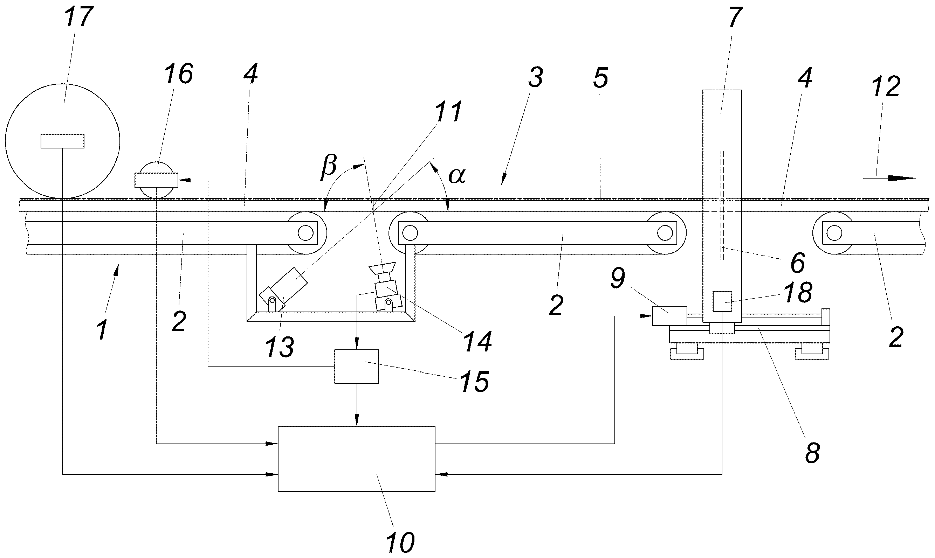

In der Zeichnung ist der Erfindungsgegenstand beispielsweise dargestellt, und zwar wird eine erfindungsgemäße Vorrichtung zum Trennen eines Strangs aus stirnseitig lose aneinanderstoßenden, mit einer durchgehenden Folie beschichteten Profilleisten in einer schematischen Seitenansicht gezeigt.

### Wege zur Ausführung der Erfindung

Die dargestellte Vorrichtung umfasst in herkömmlicher Weise einen Längsförderer 1 aus mehreren Förderabschnitten 2, bspw. Förderbändern oder Förderrollen, zur Aufnahme eines Strangs 3 aus einzelnen, stirnseitig lose aneinandergereihten Profilleisten 4, die mit einer durchgehenden Folie 5 beschichtet sind. Zum Trennen des Strangs 3 entsprechend den einzelnen Profilleisten 4 ist eine Kappsäge 6 vorgesehen, die in einem Schlitten 7 gelagert ist und mithilfe dieses Schlittens 7 entlang einer zum Längsförderer 1 parallelen Führung 8 während des Trennschnitts synchron zum Strang 3 bewegt wird. Der hierfür vorgesehene Antrieb 9 des Schlittens 7 wird zu diesem Zweck von einer Steuereinrichtung 10 in Abhängigkeit vom Strangvorschub angesteuert.

Um die Kappsäge 6 genau gegenüber dem Stoß 11 zwischen zwei Profilleisten 4 ausrichten zu können, ist der Kappsäge 6 in der gezeichneten Ausgangsstellung des Schlittens 7 innerhalb einer Leistenlänge eine Einrichtung zur Stoßerkennung vorgelagert. Diese Einrichtung umfasst eine gegen die unbeschichtete Unterseite der Profilleisten 4 unter einem spitzen Winkel α in Vorschubrichtung 12 ausgerichtete Beleuchtung 13 sowie eine digitale Kamera 14, deren optische Achse gegensinnig zur Ausrichtung der Beleuchtung 13 unter einem spitzen Winkel β gegenüber dem Längsförderer 1 geneigt verläuft. Die Anordnung ist dabei so getroffen, dass der Winkel α kleiner als der Winkel β ist. Mit einer an die digitale Kamera 14 angeschlossenen Auswerteeinheit 15 wird der Stoß zwischen zwei Profilleisten 4 erfasst und aufgrund dieser Stoßerkennung ein Steuersignal ausgegeben, das einen auf dem Strang 3 abrollenden Drehgeber 16 anstößt, der die Steuereinrichtung 10 mit Vorschubdaten beaufschlagt, die die Bewegung des Stoßes 11 zwischen den beiden Profilleisten 4 von der Erfassungslage bis zur Kappsäge 6 wiedergeben. Die Kappsäge 6 kann somit über die Steuereinrichtung 10 genau gegenüber dem in den Sägebereich geförderten Stoß 11 ausgerichtet und mithilfe des Schlittenantriebs 9 synchron zum Strang 3 bewegt werden. Der dann mit der Kappsäge 6 vorgenommene Trennschnitt verläuft in diesem Fall durch den Stoß 11.

Zusätzlich zum Drehgeber 16 ist ein auf dem Strang 3 abrollendes Messrad 17 vorgesehen, von dem fortlaufend Vorschubdaten des Strangs 3 an die Steuereinrichtung 10 übertragen werden. Kann ein Stoß 11 zwischen zwei Profilleisten 4 über die Auswerteeinheit 15 der digitalen Kamera 14 nicht erfasst werden, fehlen also die diesem Stoß 11 zugehörigen Vorschubdaten, so kann über die Vorschubdaten des Messrades 17 ein Notschnitt eingeleitet werden, der auf der Vorgabe der bekannten Leistenlänge beruht und daher eine Ausrichtung der Kappsäge 6 gegenüber dem Stoß 11 erlaubt, allerdings mit einer beschränkten Genauigkeit.

Damit die Vorschubdaten des Messrades 17 auf den letzten Schnitt der Kappsäge 6 bezogen werden können, kann der Kappsäge 6 ein Schnittmelder 18 zugeordnet werden, der die Steuereinrichtung 10 mit einem Signal beaufschlagt, das den Trennschnitt einer Schlittenstellung zuordnet, die dann der Steuereinrichtung 10 als Bezugsgröße für den durch das Messrad 17 erfassten Strangvorschub entsprechend der Leistenlänge dienen kann. Damit wird in vergleichsweise einfacher Art die Steuerung der Kappsäge 6 für einen Notschnitt bei Ausfall der Stoßerkennung ermöglicht.

## Patentansprüche

1. Vorrichtung zum Trennen eines mit einer durchgehenden Folie (5) beschichteten Strangs (3) aus stirnseitig lose aneinanderstoßenden Profilleisten (4) entsprechend den einzelnen Profilleisten (4) mit einem den Strang (3) mit der unbeschichteten Unterseite aufnehmenden Längsförderer (1), mit einem eine Kappsäge (6) aufweisenden, während des Trennschnitts durch einen Antrieb (9) synchron zum Strang (3) bewegbaren Schlitten (7), mit einer Messeinrichtung für den Strangvorschub und mit einer den Schlittenantrieb (9) in Abhängigkeit vom Strangvorschub steuernden Steuereinrichtung (10), wobei der Kappsäge (6) in der Ausgangsstellung des Schlittens (7) innerhalb einer Leistenlänge eine Einrichtung zur Erfassung der Stöße zwischen den einzelnen Profilleisten (4) vorgelagert ist, und wobei die Einrichtung zur Stoßerfassung eine unter einem spitzen Winkel (α) gegenüber dem Längsförderer (1) ausgerichtete Beleuchtung (13) und eine digitale Kamera (14) umfasst, **dadurch gekennzeichnet, dass** die optische Achse der digitalen Kamera (14) gegenüber dem Längsförderer (1) gegensinnig zur Beleuchtung (13) geneigt ist, dass die Vorrichtung einen auf dem Strang (3) abrollenden, an die Steuereinrichtung (10) als Messeinrichtung für den Strangvorschub angeschlossenen Drehgeber (16) aufweist, dass die digitale Kamera (14) eine Auswerteeinheit (15) aufweist, und dass der Drehgeber (16) durch die Auswerteeinheit (15) der digitalen Kamera (14) ansteuerbar ist.

2. Vorrichtung nach Anspruch 1, **dadurch gekennzeichnet, dass** die in Vorschubrichtung (12) ausgerichtete Beleuchtung (13), unter einem kleineren spitzen Winkel (α) gegenüber dem Längsförderer (1) geneigt ist als die digitale Kamera (14).

3. Vorrichtung nach Anspruch 1 oder 2, **dadurch gekennzeichnet, dass** ein auf dem Strang (3) abrollendes, die Steuereinrichtung (10) durchgehend mit Vorschubdaten beaufschlagendes Messrad (17) vorgesehen ist, dass die Kappsäge einen den Trennschnitt auf eine Schlittenstellung beziehenden, mit der Steuereinrichtung (10) verbundenen Schnittmelder (18) aufweist und dass beim Ausbleiben eines den Drehgeber (16) ansteuernden Steuersignals der Auswerteeinheit (15) die Steuereinrichtung (10) die Kappsäge (6) in Abhängigkeit von den Daten des Schnittmelders (18) und von den Vorschubdaten des Messrads (17) für einen Notschnitt ansteuert.

## Claims

1. Device for separating a strand (3) coated with a continuous film (5), wherein the strand (3) is composed of profile strips (4) loosely abutting one another at the ends corresponding to the individual profile strips (4), the device comprising a longitudinal conveyor (1) receiving the strand (3) with the uncoated underside, a carriage (7) having a chop saw (6) and being movable synchronously with the strand (3) by a drive (9) during the separation cut, a measuring device for the strand feed and a control device (10) controlling the carriage drive (9) in dependence on the strand feed, wherein a device for detecting the butt joints between the individual profile strips (4) is mounted upstream of the chop saw (6) in the starting position of the carriage (7) within a strip length, and wherein the device for detecting the butt joints comprises a lighting means (13) oriented at an acute angle (α) with respect to the longitudinal conveyor (1) and comprises a digital camera (14), **characterised in that** the optical axis of the digital camera (14) is inclined with respect to the longitudinal conveyor (1) oppositely to the lighting means (13), **in that** the apparatus has a rotary encoder (16) which rolls on the strand (3) and is connected to the control device (10) as a measuring device for the strand feed, **in that** the digital camera (14) has an evaluation unit (15), and **in that** the rotary encoder (16) can be controlled by the evaluation unit (15) of the digital camera (14).

2. Device according to claim 1, **characterised in that** the lighting means (13) oriented in the feed direction (12) is inclined at a smaller acute angle (α) relative to the longitudinal conveyor (1) than the digital camera (14).

3. Apparatus according to claim 1 or 2, **characterised in that** a measuring wheel (17) is provided, which rolls on the strand (3) and continuously applies feed data to the control device (10), **in that** the chop saw has a cut indicator (18) which relates the cut to a carriage position and is connected to the control device (10), and **in that**, in the absence of a control signal from the evaluation unit (15) controlling the rotary encoder (16), the control device (10) actuates the chop saw (6) for an emergency cut as a function of the data from the cut indicator (18) and of the feed data from the measuring wheel (17).

## Revendications

1. °/ Dispositif de séparation d'un brin (3) revêtu d'un film continu (5) à partir de bandes profilées (4) en appui l'une contre l'autre de façon lâche sur le côté avant en fonction des bandes profilées individuelles (4), comprenant un transporteur longitudinal (1) qui maintient le brin (3) avec la face inférieure non revêtue, comprenant un chariot (7) qui est doté d'une scie à tronçonner (6) et qui peut être déplacé de manière synchrone avec le brin (3) pendant la coupe de séparation par un entraînement pour chariot (9), comprenant un dispositif de mesure servant à mesurer l'avance du brin, et comprenant un dispositif de commande (10) qui commande l'entraînement pour chariot (9) en fonction de l'avance du brin, dans lequel un dispositif de détection de raccords bout à bout entre les différentes bandes profilées (4) est agencé en amont de la scie à tronçonner (6) dans la position initiale du chariot (7) à l'intérieur de la limite d'une longueur de bande, et dans lequel le dispositif de détection de raccords bout à bout comprend un moyen d'éclairage (13) qui est orienté suivant un angle aigu (α) par rapport au transporteur longitudinal (1) et une caméra numérique (14), **caractérisé en ce que** l'axe optique de la caméra numérique (14) est incliné à l'opposé du moyen d'éclairage (13) par rapport au transporteur longitudinal (1), **en ce que** le dispositif comprend un capteur rotatif (16) qui roule sur le brin (3) et qui est relié au dispositif de commande (10) en tant que dispositif de mesure servant à mesurer l'avance du brin, **en ce que** la caméra numérique (14) est pourvue d'une unité d'évaluation (15), et **en ce que** le capteur rotatif (16) peut être commandé par l'unité d'évaluation (15) de la caméra numérique (14).

2. °/ Dispositif selon la revendication 1, **caractérisé en ce que** le moyen d'éclairage (13) orienté dans le sens d'avance (12) est incliné suivant un angle aigu (α) qui est plus petit par rapport au convoyeur longitudinal (1) que par rapport à la caméra numérique (14).

3. °/ Dispositif selon la revendication 1 ou 2, **caractérisé en ce qu'**il comprend une roue de mesure (17) qui roule sur le brin (3) et qui alimente de façon continue le dispositif de commande (10) en données d'avance, **en ce que** la scie à tronçonner est équipée d'un dispositif de mesure qui rapporte la coupe de séparation à une position du chariot, **en ce que** le dispositif de commande (10) donne l'instruction à la scie à tronçonner (6) de procéder à une coupe d'urgence sur la base des données du détecteur de coupe (18) relié au dispositif de commande (10) ainsi que des données d'avance de la roue de mesure (17) en l'absence d'un signal de commande en provenance de l'unité d'évaluation (15) pour commander le capteur rotatif (16).
